# EUROPÄISCHE PATENTSCHRIFT

(11) **EP 0 478 948 B1**
(45) Veröffentlichungstag und Bekanntmachung des Hinweises auf die Patenterteilung: **15.02.1995**
(21) Anmeldenummer: 91114281.8
(22) Anmeldetag: 26.08.1991
(51) Int. Cl.: F16D 55/40

(54) **Spreizzylinderanordnung für die Bremsbetätigung von Scheibenbremsen, insbesondere für Lamellenscheibenbremsen von Schienenfahrzeugen**
Expanding cylinder arrangement for the actuation of disc brakes, particularly for multiple disc brakes of rail vehicles
Structure de cylindre écartant pour l'actionnement de freins à disque, notamment pour freins à disques multiples pour véhicules ferroviaires

(30) Priorität: 04.10.1990 DE 4031334
(43) Veröffentlichungstag der Anmeldung: 08.04.1992
(73) Patentinhaber: KNORR-BREMSE AG, 80710 München (DE)
(72) Erfinder: Wirth, Xaver, Dr., W-8045 Ismaning (DE)

(56) Entgegenhaltungen:
- FR-A- 2 127 135
- GB-A- 2 183 309

## Beschreibung

Die Erfindung betrifft eine Spreizzylinderanordnung nach dem Gattungsbegriff des Patentanspruches 1.

Bei einer Spreizzylinderanordnung der gattungsgemäßen Art (GB-A- 2 183 309) ist ein Hilfskolben vorgesehen, welcher sich wenigstens teilweise durch beide Kolben erstreckt und Mittel zur gegenseitigen Nachstellung entsprechend Bremsverschleiß trägt. Die beiden Kolben sind an ihrem Außenumfang gegenüber dem Innenumfang eines Gehäuses geführt; an den Stirnseiten der beiden Kolben bei Bremsbetätigung zur Wirkung gelangende Querkräfte werden unmittelbar von den beiden Kolben auf das Gehäuse übertragen; die Möglichkeit der Verkantung der beiden Kolben sowohl gegenüber dem Gehäuse als auch gegenüber dem im Inneren sich erstreckenden Hilfskolben ist gegeben.

Bremsbeläge in Bremssatteln bzw. Statorelemente in Lamellenscheibenbremsen machen während des Reibkraftaufbaues infolge Zuspannung aufgrund ihrer spielbehafteten Axialführung kleine Verschiebungen quer zur Achse der Zuspannkolben. Da die Kolbenführung wegen des oftmals vorhandenen knappen Einbauraumes relativ kurz und das Radialspiel des Kolbens bzw. der Kolben sehr eng ist, treten durch die äußere Querkraft intern große Kantenpressungen auf, die zu einem einseitigen Verschleiß und zu Hysteresevergrößerungen führen können. Insbesondere dann, wenn aus thermisch bedingten Gründen die Kolbendichtung nicht im Führungsbereich liegt und damit die Führung außerhalb des Eigenschmierungsbereiches des Hydrauliköles liegt, kann die querkraftbedingte Reibung unzulässig hohe Werte annehmen. Das Verhältnis der Kräfte zueinander ist so, daß bei kleinem Länge/Durchmesser-Verhältnis der Führung die Kantenkräfte um ein Vielfaches höher liegen können als die Querkraft selbst.

Davon ausgehend besteht die Aufgabe der Erfindung darin, eine Spreizzylinderanordnung der gattungsgemäßen Art so auszugestalten, daß eine weitgehend verkantungsfreie Führung der Kolben trotz kurzer Baulänge ermöglicht ist. Gleichzeitig soll ein definierter Kolbenrückhub beider Kolben ermöglicht sein.

Zur Lösung dieser Aufgabe dienen die Merkmale nach dem Kennzeichnungsteil des Patentanspruches 1.

Durch die Verwendung des Hilfskolbens im Inneren der beiden Kolben ist die Möglichkeit einer Innen- und Außenführung für die beiden Kolben gegeben; mittels der Fixierung des Hilfskolbens am Gehäuse ist ausreichende Baulänge des Hilfskolbens gewährleistet, es ist außerdem sichergestellt, daß jeder Kolben für sich definierte Rückhubbewegungen gegenüber einem mittigen Fixpunkt ausüben kann. Der Hilfskolben als Fixpunkt für den Kolbenrückhub und als sekundäre Kolbenführung ist im Bedarfsfall radial verschieblich, so daß die Außenführung gegenüber den Kolben wirksam ist; der Hilfskolben kann auch radial gehalten sein, wodurch Querkräfte über den Hilfskolben axialmittig in das Gehäuse der Zuspanneinrichtung eingeleitet werden und ein verkantungsfreies Verschieben der Kolben ermöglicht ist. In diesem Falle ist durch die Eigenschmierung im Inneren der Kolben, d.h. im Bereich der Innenführung dafür Sorge getragen, daß der Reibungswiderstand auf ein Minimum reduzierbar ist.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert:
- Fig.1: ist eine Schnittansicht der erfindungs gemäßen Spreizzylinderanordnung im eingefahrenen Zustand, mit radial verschieblichem Hilfskolben; und
- Fig.2: ist eine Schnittansicht der erfindungs gemäßen Spreizzylinderanordnung in ausge fahrenem Zustand der beiden Kolben, mit radial geführtem Hilfskolben

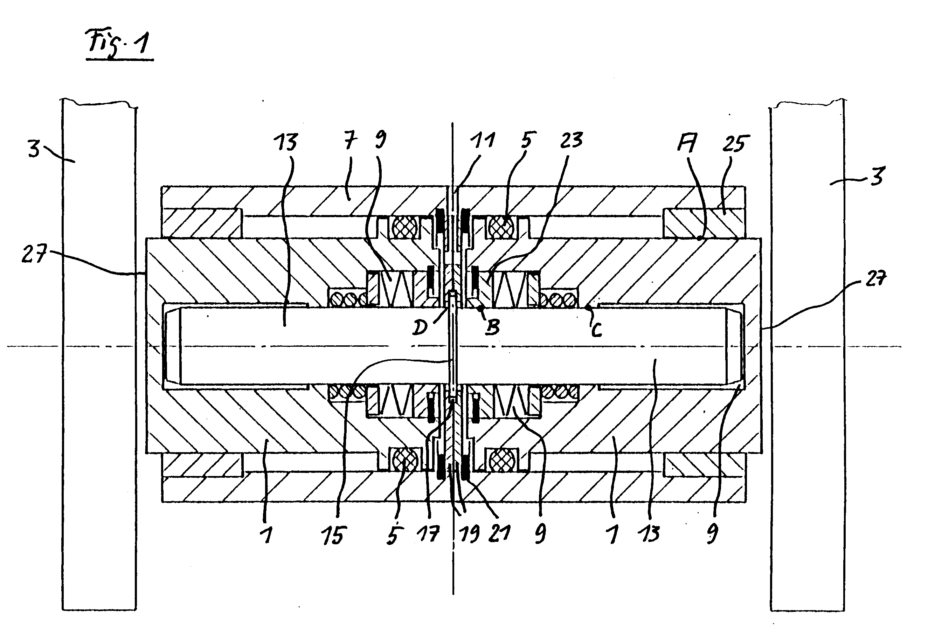

In Fig.1 der Zeichnung ist ein Spreizzylinder zur Bremsbetätigung bei Schienenfahrzeugen dargestellt, welcher mit seinen beiden Kolben 1 gegenüber Bremsbelägen 3 in einem (nicht dargestellten) Bremssattel bzw. gegenüber (nicht dargestellten) Statorelementen einer Lamellenscheibenbremse zu wirken vermag. Die Kolben 1 tragen an ihrem Außenumfang wenigstens einen Dichtring 5 und sind axial verschieblich in einem Gehäuse 7 geführt. Die Kolben sind zum Zwecke der Bremsbetätigung hydraulisch beaufschlagbar, wobei für die Druckmittelkammern 9 der Kolben ein gemeinsamer Einlaß 11 vorgesehen ist. Der Einlaß ist als eine die Wandung des Gehäuses 7 mittig durchsetzende Bohrung ausgebildet, welche in beliebiger Weise mit dem Inneren der beiden Kolben in Verbindung steht.

Gemäß der Erfindung sind die Kolben 1 jeweils mit einer Doppelführung zwischen dem Gehäuse 7 und einem im Inneren der Kolben befindlichen Hilfskolben 13 ausgestattet. Der Hilfskolben 13 erstreckt sich axial innerhalb der beiden Kolben 1 und weist in der Mitte einen Bund 15 auf; der Bund erstreckt sich radial innerhalb einer Nut 17, welche am Innenumfang einer Zentrierscheibe 19 vorgesehen ist. Die Zentrierscheibe ist in ihrem Außenumfang beispielsweise mittels zweier frontseitig an der Zentrierscheibe befindlicher, am Innenumfang des Gehäuses 7 befestigter Sicherungsringe 21 fixiert, welche die Zentrierscheibe 19 in der dargestellten Mittellage bezüglich der beiden Gehäusehälften halten. Auf diese Weise ist die Axialposition des Bunds 15 und somit des Hilfskolbens 13 innerhalb der beiden Kolben 1 gesichert.

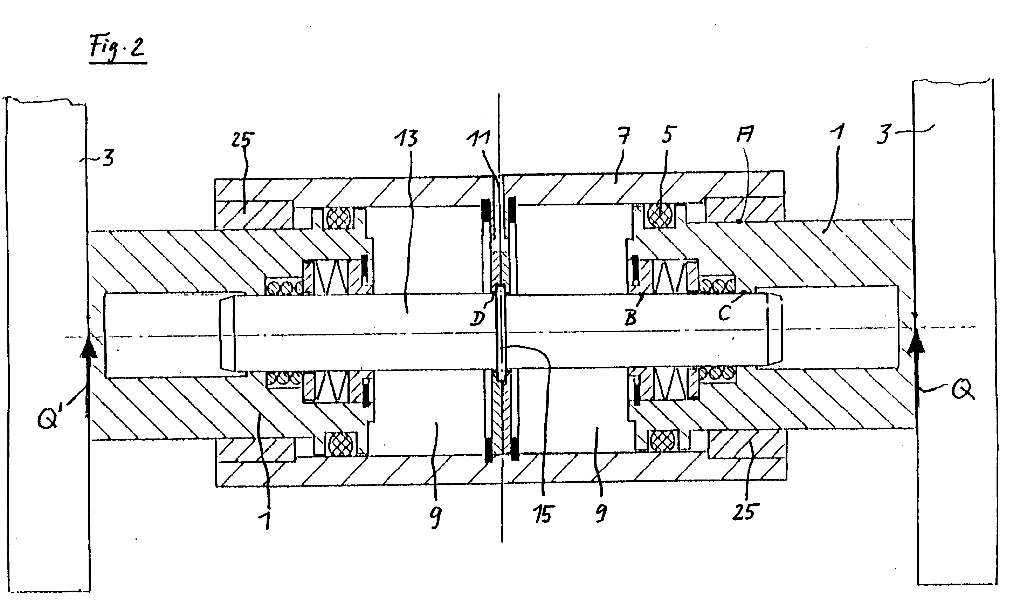

Die beiden Kolben 1 sind mittels Doppelführung sowohl am Hilfskolben 13 als auch am Gehäuse 7 geführt, wobei mit A die Außenführung des Kolbens benannt ist, während mit B, C die Innenführung der beiden Kolben bezeichnet ist. Hierbei liegt der Abschnitt B der Innenführung im dargestellten Ausführungsbeispiel an einem im Kolben 1 geführten Innenring 23 einer im einzelnen nicht erläuterten Nachstelleinrichtung, während der Abschnitt C im Bereich unmittelbarer Anlage des Innenumfangs des Kolbens 1 am Außenumfang des Hilfskolbens 13 gegeben ist. Die Außenführung A ist durch spielbehaftete Führung des Kolbens an seinem Außenumfang gegenüber einem Führungsring 25 am Innenumfang des Gehäuses 7 gegeben. Grundsätzlich sind auch andere Führungspaarungen zwischen Hilfskolben und Kolben bzw. Gehäuse und Kolben im Rahmen des der Erfindung eigenen Gedankens möglich; in gleicher Weise können die Abschnitte B und C auf einem gemeinsamen inneren Führungsabschnitt zusammengefaßt sein. Zum erfindungsgemäßen Aufbau der Führung gehört außerdem die Lagerung des Hilfskolbens 13, welcher im Abschnitt D (Fig.1 und 2) radial geführt ist, derart, daß sich der Bund 15 radial in der Nut 17 bewegen kann oder in Radialrichtung kein Spiel aufweist, wie nachfolgend erläutert ist.

Mit Hilfe der erfindungsgemäßen Anordnung sind zwei Möglichkeiten einer verbesserten Kolbenführung gegeben:

Kolbenführung mit radial verschieblichem Hilfskolben (Fig.1):

Bei dieser Ausführung wird das Kippen der beiden Kolben 1 durch die Innenführung B,C, verhindert, da hier ein großes Verhältnis von Länge zu Durchmesser, also ein großes 1/d vorliegt. Äußere Querkräfte Q und Q' an den Kolbenstirnflächen 27 führen im Fall des radial verschieblichen Hilfskolbens 13 zu einer Querverschiebung des ganzen Kolbenverbandes, bestehend aus Hilfskolben und Kolben, bis zum Anschlag in der Außenführung A. Voraussetzung hierfür ist, daß die Nut 17 so groß dimensioniert ist, daß sich der Bund 15 nicht an den Nutgrund anlegen kann, bevor die Anlage an der Außenführung A vorliegt. Die Auflagerkräfte in den Außenführungen A entsprechen dabei der Größe nach den äußeren Querkräften Q und Q'.

Kolbenführung mit radial geführtem Hilfskolben (Fig.2):

Wird das Radialspiel der mittig angeordneten Hilfskolbenlagerung kleiner gewählt als das der beiden Kolben 1 gegenüber der Außenführung A, liegt also der Bund 15 am Nutgrund der Nut 17 an, bevor die Anlage der Kolben an der Außenführung A vorliegt, und ist die Biegesteifigkeit des Hilfskolbens 13 hinreichend groß, so herrscht unter der Einwirkung gleich großer äußerer Querkräfte Q und Q' Momentengleichgewicht im Abschnitt D, welcher als Lagerstelle wirkt. Die reibungsverursachenden Lagerkräfte in der Führung sind dann theoretisch 0. Tatsächlich sind die äußeren Querkräfte nie gleich groß, weswegen mindestens an einem Kolben dann die Lagerkraft wirkt, die der Differenz der beiden Querkräfte Q und Q' entspricht. Die Auflagerkräfte an der Außenführung A sind jedoch wesentlich kleiner als die Querkräfte selbst.

### Bezugszeichenliste

- 1: Kolben
- 3: Bremsbelag
- 5: Dichtung
- 7: Gehäuse
- 9: Druckmittelkammer
- 11: Verbindung
- 13: Hilfskolben
- 15: Bund
- 17: Nut
- 19: Zentrierscheibe
- 21: Sicherungsring
- 23: Innenring
- 25: Führungsring
- 27: Kolbenstirnfläche

- A: Außenführung
- B,C: Innenführung
- B: Abschnitt
- C: Abschnitt
- D: Abschnitt
- Q,Q′: Querkraft

## Patentansprüche

1. Spreizzylinderanordnung für die Bremsbetätigung von Scheibenbremsen, insbesondere für Lamellenscheibenbremsen von Schienenfahrzeugen, mit zwei in einem zylindrischen Gehäuse (7) gegenüber dem Innenumfang desselben unter Abdichtung axial verschieblichen und durch Druckmittel beaufschlagbaren Kolben (1,1), welche stirnseitig aus dem Gehäuse (7) herausschiebbar sind und jeweils gegenüber einem Bremsbelag (3) bzw. Statorelement der Bremsanordnung wirken, derart, daß bei Druckbeaufschlagung der beiden Kolben (1.1) diese unter Führung durch das Gehäuse (7) aus diesem herausschiebbar sind und mit Hilfe des Bremsbelages bzw. Statorelements gegenüber einer Bremsscheibe bzw. einem parallel zum Statorelement geführten Rotorelement wirken, gekennzeichnet durch folgende Merkmale:
a) die beiden Kolben (1,1) sind axial verschieblich gegenüber dem Außenumfang des Hilfskolbens (13) geführt (Innenführungen B,C);
b) der Hilfskolben (13) ist in axialmittiger Lage des Gehäuses (7) von einer Zentrierscheibe (19) umschlossen, wobei die Zentrierscheibe eine zentrale Öffnung aufweist, durch welche sich der Hilfskolben (13) erstreckt, derart, daß die Enden des Hilfskolbens (13) im Inneren der beiden Kolben (1,1) enden;
c) die Zentrierscheibe (19) ist an ihrem Außenumfang mittels beidseitig befindlicher Sicherungsringe (21) axial gegenüber dem Innenumfang des Gehäuses (7) gesichert; und
d) am Außenumfang des Hilfskolbens (13) ist axialmittig ein Bund (15) ausgebildet, welcher zum Zwecke der axialen Sicherung des Hilfskolbens in eine am Innenumfang der Zentrierscheibe (19) befindliche Nut (17) eingreift.

2. Spreizzylinderanordnung nach Anspruch 1, gekennzeichnet durch folgende Merkmale:
der Außenumfang des Bunds (15) weist gegeüber dem Nutgrund der Nut (17) einen radialen Mindestabstand auf, derart, daß der Hilfskolben (13) radial verschieblich ist und die von ihm geführten Kolben (1,1) an am Innenumfang des Gehäuses (7) befindliche Außenführungen (A) anlegbar sind.

3. Spreizzylinderanordnung nach Anspruch 1, dadurch gekennzeichnet, daß der Außenumfang des Bunds (15) spielfrei in der Nut (17) geführt ist, derart, daß bei Einwirken äußerer Querkräfte (Q,Q') an den beiden Stirnflächen (27) der beiden Kolben (1,1) diese axialmittig mittels der Zentrierscheibe (19) am Gehäuse (7) abgestützt sind.

4. Spreizzylinderanordnung nach einem der vorangehenden Ansprüche, dadurch gekennzeichnet, daß die Führung der beiden Kolben (1,1) gegenüber dem Hilfskolben (13) (Innenführung B,C) aus zwei axialen Abstand aufweisenden Abschnitten direkter Anlage des Innenumfangs der Kolben (1,1) am Außenumfang des Hilfskolbens (13) besteht.

5. Spreizzylinderanordnung nach einem der vorangehenden Ansprüche, dadurch gekennzeichnet, daß die beiden Kolben (1,1) im Bereich ihres inneren Endes jeweils mit einer Dichtung (5) gegenüber dem Innenumfang des Gehäuses abgedichtet sind, und daß das Gehäuse (7) zwischen den beiden Dichtungen (5) der Kolben einen die Wandung des Gehäuses durchsetzenden Einlaß (11) aufweist, welcher mit dem Inneren der beiden Kolben (1,1) in Verbindung steht, derart, daß die beiden Kolben durch den Einlaß (11) mittels Druckmittel zum Zwecke ihrer Verschiebung beaufschlagbar sind.

## Claims

1. Expanding cylinder arrangement for the actuation of disc brakes, particularly for multiple disc brakes, of rail vehicles, having two pistons (1, 1) which are axially movable in a sealed manner in a cylindrical housing (7) with respect to the inner circumference of the same and can be acted on by pressure medium, which pistons can be pushed out of the endsof the housing (7) and act with respect to a brake lining (3) or stator element of the brake arrangement in such a way that when pressure is applied to the two pistons (1, 1) they can be pushed out of the housing (7), being guided by it, and with the aid of the brake lining or stator element they act with respect to a brake disc or a rotor element guided parallel to the stator element, characterised by the following features:
a) the two pistons (1, 1) are guided axially displaceably with respect to the outer circumference of an auxiliary piston (13) (inner guides B,C);
b) the auxiliary piston (13) is surrounded in the axially central position of the housing (7) by a centering disc (19), the centering disc having a central aperture through which the auxiliary piston (13) extends in such a way that the ends of the auxiliary piston (13) end inside the two pistons (1, 1);
c) the centering disc (19) is secured on its outer circumference axially with respect to the inner circumference of the housing (7) by means of circlips (21) located on both sides; and
d) on the outer circumference of the auxiliary piston (13) a collar (15) is formed axially centrally and for the purpose of the axial securing of the auxiliary piston it engages into a groove (17) located on the inner circumference of the centering disc (19).

2. Expanding cylinder arrangement according to claim 1, characterised by the following features:
the outer circumference of the collar (15) has a minimum radial spacing with respect to the base of the groove (17) such that the auxiliary piston (13) is radially movable and the pistons (1, 1) guided by it can be applied to outer guides (A) located on the inner circumference of the housing (7).

3. Expanding cylinder arrangement according to claim 1, characterised in that the outer circumference of the collar (15) is guided without clearance in the groove (17) in such a way that when outer transverse forces (Q, Q′) act on the two front faces (27) of the two pistons (1, 1) they are supported axially centrally by means of the centering disc (19) on the housing (7).

4. Expanding cylinder according to one of the preceding claims, characterised in that the guide of the two pistons (1, 1) with respect to the auxiliary piston (13) (inner guide B, C) comprises two axially spaced sections of direct abutment of the inner circumference of the pistons (1, 1) on the outer circumference of the auxiliary piston (13).

5. Expanding cylinder arrangement according to one of the preceding claims, characterised in that in the region of their inner end the two pistons (1, 1) are sealed with respect to the inner circumference of the housing (7) in each case with a seal (5), and that between the two seals (5) the housing (7) has an inlet (11) passing through the walls of the housing, this inlet being in connection with the inside of the two pistons (1, 1) in such a way that the two pistons can be acted on through the inlet (11) by means of pressure medium in order to move them.

## Revendications

1. Dispositif de vérin d'écartement pour l'actionnement de freins à disques, notamment de freins à disques multiples de véhicules sur rails, comportant deux pistons (1,1) déplaçables axialement dans un boîtier cylindrique (7) d'une manière étanche par rapport à la circonférence intérieure de ce boîtier et pouvant être chargés par un fluide comprimé et qui peuvent être ressortis frontalement hors du boîtier (7) et agissent respectivement par rapport à une garniture de frein (3) ou un élément formant stator du disque de frein de telle sorte que, dans le cas d'une charge en pression des deux vérins (1,1), ces derniers peuvent être ressortis du boîtier (7) en étant guidés dans ce dernier et agissent, au moyen de la garniture de frein ou de l'élément formant stator, par rapport à un disque de frein ou un élément formant rotor guidé parallèlement à l'élément formant stator, caractérisé par les caractéristiques suivantes :
a) les deux pistons (1,1) sont guidés avec possibilité de déplacement axial par rapport à la périphérie extérieure du piston auxiliaire (13) (guides intérieurs B, C);
b) le piston auxiliaire (13) est entouré par un disque de centrage (19) dans la zone centrale, dans le sens axial, du boîtier (7), le disque de centrage possédant une ouverture centrale que traverse le piston auxiliaire (13) de telle sorte que les extrémités du piston auxiliaire (13) se terminent à l'intérieur des deux pistons (1,1);
c) le disque de centrage (19) est bloqué axialement, au niveau de sa périphérie extérieure, par rapport à la périphérie intérieure du boîtier (7), au moyen de bagues de blocage (21) disposées des deux côtés; et
d) sur la périphérie extérieure du piston auxiliaire (13) est disposé, au centre dans la direction axiale, un collet (15), qui, pour réaliser le blocage axial du piston auxiliaire, s'engage dans une gorge (17) ménagée dans la périphérie intérieure du disque de centrage (19).

2. Dispositif de vérin d'écartement suivant la revendication 1, caractérisé par les caractéristiques suivantes :
la périphérie extérieure du collet (15) est séparée, par une distance radiale minimale, du fond de la gorge (17) de telle sorte que le piston auxiliaire (13) est déplaçable radialement et que le piston (1,1), qui est guidé par le piston auxiliaire, peut s'appliquer contre des guides extérieurs (A) situés sur la périphérie intérieure du boîtier (7).

3. Dispositif de vérin d'écartement suivant la revendication 1, caractérisé par le fait que le pourtour extérieur du collet (15) est guidé sans jeu dans la gorge (17) de sorte que, lors de l'action de forces transversales extérieures (Q,Q') sur les deux faces frontales (27) des deux pistons (1,1), ces derniers sont supportés d'une manière centrée axialement sur le boîtier (7) au moyen du disque de centrage (19).

4. Dispositif de vérin d'écartement suivant l'une des revendications précédentes, caractérisé par le fait que le guidage des deux pistons (1,1) par rapport au piston auxiliaire (13) (guides intérieurs B, C) est constitué par deux sections, distantes axialement, d'application directe de la circonférence intérieure du piston (1,1) sur la circonférence extérieure du piston auxiliaire (13).

5. Dispositif de vérin d'écartement suivant l'une des revendications précédentes, caractérisé en ce que les deux pistons (1,1) sont étanchéifiés, au niveau de leur extrémité intérieure, par rapport à la circonférence intérieure du boîtier au moyen d'une garniture d'étanchéité (5), et que le boîtier (7) possède, entre les deux garnitures d'étanchéité (5) des pistons, une entrée (11) qui traverse la paroi du boîtier et qui est en communication avec l'intérieur des deux pistons (1,1) de sorte que les deux pistons peuvent être chargés, au niveau de l'entrée (11), par un fluide comprimé, pour leur déplacement.
